(19) **Europäisches Patentamt European Patent Office Office européen des brevets**

(11) **EP 4 783 080 A1**

(12) **EUROPEAN PATENT APPLICATION**

(43) Date of publication:
29.07.2026 Bulletin 2026/31

(21) Application number: 26152262.7

(22) Date of filing: 16.01.2026

(51) International Patent Classification (IPC):
*G06Q 10/00* (2026.01)   *G06Q 10/02* (2012.01)
*G06Q 30/0283* (2023.01)   *G06Q 50/40* (2024.01)

(52) Cooperative Patent Classification (CPC):
**G06Q 10/02; G06Q 10/00; G06Q 30/0283;
G06Q 50/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 28.01.2025 JP 2025012067

(71) Applicant: **Nomura Research Institute, Ltd.
Chiyoda-ku
Tokyo 100-0004 (JP)**

(72) Inventors:
• **Nakamura, Hiroyuki**
  **Chiyoda-ku, Tokyo, 100-0004 (JP)**
• **Arai, Akira**
  **Chiyoda-ku, Tokyo, 100-0004 (JP)**
• **Nagama, Yudai**
  **Chiyoda-ku, Tokyo, 100-0004 (JP)**
• **Kawashima, Hiroki**
  **Chiyoda-ku, Tokyo, 100-0004 (JP)**
• **Fukushima, Hiroko**
  **Chiyoda-ku, Tokyo, 100-0004 (JP)**

(74) Representative: **Hoffmann Eitle
Patent- und Rechtsanwälte PartmbB
Arabellastraße 30
81925 München (DE)**

(54) **TRANSPORTATION TICKETING SYSTEM**

(57)     An object of the present invention is to provide a maximum discount to a user while minimizing a risk of a business operator damaging profits.

A transportation ticketing system 1 that sells a ticket related to a transportation means to a user includes an application management unit 11 that receives a condition including a destination and a deadline specified by the user, a price calculation unit 12 that calculates a price of the ticket based on available seat information up to the specified deadline and presents the price to the user by the application management unit 11, and a service presentation unit 13 that selects, when the user accepts the presented price, a service based on a predetermined criterion from candidate combinations of an outbound service departing by the deadline date and a return service corresponding to the outbound service and presents the service to the user by the application management unit 11.

*FIG. 1*

EP 4 783 080 A1

## Description

Technical Field

The present invention relates to a ticket selling technique, and particularly relates to a technique that is effective when applied to a transportation ticketing system that proposes a service that maximizes benefits of both a transportation operator and a user.

Background Art

In recent years, "regional revitalization", advocated by the government, has become one of the keywords in the travel and transportation industries. Various ideas are being considered in order to contribute to the revitalization of local economies and cultures in the view of the travel and transportation industries, while leading to revitalization of the industries themselves.

For example, JP 7348382 B2 (Patent Literature 1) describes a mechanism that targets users who "want to go somewhere" without specifically limiting the destination. This mechanism preferentially selects and proposes less-trafficked regions as destination areas, thereby attracting users to those destinations. This is intended to lead to the revitalization of those destination areas while offering users an element of surprise regarding their choice of destination and itinerary.

Citation List

Patent Literature

Patent Literature 1: JP 7348382 B2

Summary of Invention

Technical Problem

According to the prior art, by guiding a user to a predetermined destination, revitalization of the destination area can be promoted.

On the other hand, there are many users who have a destination they want to visit but have not yet decided whether or not to actually go, or when they would go if they decide to go, and who only keeps a thought "I want to go someday". For such users, business operators such as travel agencies or transportation companies like railways, can consider guiding them to actually visit the destination by providing incentives, for example, by offering a discount on the fare. However, in conventional fee tables, such as those set by travel agencies for packaged tours, different prices are set based on the season. While users can decide the timing of their trip by viewing these prices, the fees for each period are predetermined, making it difficult to actively entice users with a larger discount at the moment they apply.

Therefore, an object of the present invention is to provide a transportation ticketing system capable of providing a maximum discount to a user while minimizing a risk of a business operator damaging profits. The object described above, other objects and novel features of the present invention will become apparent from the description herein and the accompanying drawings.

Solution to Problem

An overview of a representative embodiment of the invention disclosed in the present application will be briefly described as follows.

A transportation ticketing system according to a representative embodiment of the present invention is a transportation ticketing system that sells a ticket related to a transportation means to a user and includes an application management unit that receives a condition including a destination and a deadline specified by the user, a price calculation unit that calculates a price of the ticket based on available seat information up to the specified deadline, and presents the price to the user by the application management unit, and a service presentation unit that, when the user accepts the presented price, selects a service based on a predetermined criterion from candidate combinations of an outbound service satisfying the condition and a return service corresponding to the outbound service and presents the service to the user by the application management unit.

Advantageous Effects of Invention

An effect obtained by the representative embodiment of the invention disclosed in the present application will be briefly described as follows. In other words, according to the representative embodiment of the present invention, it is possible to sell a ticket in a form of providing a maximum discount to a user while minimizing a risk of a business operator damaging the profits.

Brief Description of Drawings

[Fig. 1] Fig. 1 is a diagram illustrating an outline of a configuration example of a transportation ticketing system according to an embodiment of the present invention.
[Fig. 2] Fig. 2 is a diagram illustrating an example of an overall processing flow of ticket sales according to an embodiment of the present invention.
[Fig. 3] Fig. 3 is a diagram illustrating an outline of an example of a screen on which a user inputs a condition according to an embodiment of the present invention.
[Fig. 4] Fig. 4 is a diagram illustrating an outline of an example of a flow of price calculation processing according to an embodiment of the present invention.
[Fig. 5] Fig. 5 is a diagram illustrating an outline of an example of a flow of service presentation processing according to an embodiment of the present invention.
[Fig. 6] Fig. 6 is a diagram illustrating an outline of an example of creating candidate combinations of services for a round trip according to an embodiment of the present invention.
[Fig. 7] Fig. 7 is a diagram illustrating an outline of an example of creating combinations of a round-trip service and a user application according to an embodiment of the present invention.
[Fig. 8] Fig. 8 is a diagram illustrating an outline of an example of a screen for presenting content selected as a round-trip service to the user according to an embodiment of the present invention.
[Fig. 9] Fig. 9 is a diagram illustrating an outline of an example of a screen in a case where a ticket is not sold according to an embodiment of the present invention.

Description of Embodiments

An embodiment of the present invention will be described in detail below with reference to the drawings. In all of the drawings for describing the embodiment, the same portions are basically denoted by the same reference signs, and the duplicate description thereof will be omitted. Meanwhile, components denoted by reference signs described with reference to a certain drawing are not illustrated in another drawing, but the components may be described again with the same reference signs.

<Overview>

As described above, for users who have a destination they want to visit but only keep the thought of "I want to go someday", conventional packaged tours and the like induce travel during less expensive periods by setting different prices according to the season. However, the prices for each period are determined in advance and the users make the decision to travel or not, and set the itinerary if they decide to go, based on viewing these prices before applying. Therefore, it is difficult to actively entice the users with a significantly larger discount at the time of application. On the other hand, there is a need for a business operator to increase the number of new users without reducing the number of users who travel at the regular price while minimizing the risk of impairing profits when offering a discount.

Therefore, the transportation ticketing system according to an embodiment of the present invention enables enticing the users by providing the maximum discount to the users while minimizing the risk of the business operator impairing profits in exchange for removing the user's freedom to decide the travel itinerary. Specifically, the price of the ticket to be presented is calculated using a method or a concept such as a real option based on the latest available seat information. Then, in a case where the user applies for the price that is presented, a specific itinerary and services that maximize the benefit of both the business operator and the user are selected and presented to the user, according to a utility value of the business operator and a utility value of the user (prediction of the satisfaction level) based on the available seat information or the like.

Note that, according to the present embodiment, description is given targeting railway tickets but the scope of the tickets is not limited to railways. The system can be applied to any means of transportation that involves pre-set services which users pay for and reserve before use, such as bus tickets, air tickets, or ship tickets.

<System Configuration>

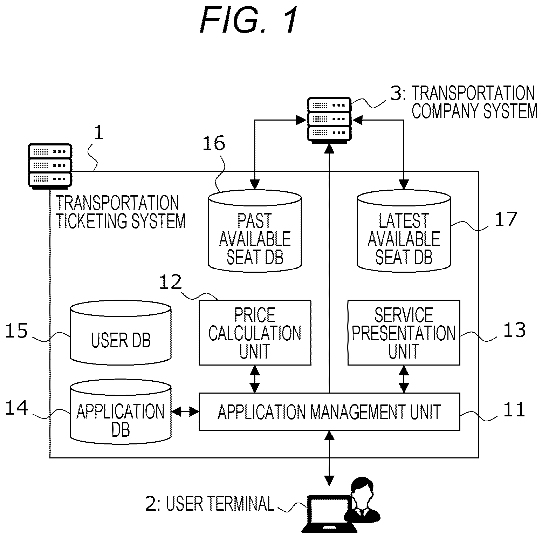

Fig. 1 is a diagram illustrating an outline of a configuration example of a transportation ticketing system 1 according to an embodiment of the present invention. The transportation ticketing system 1 includes, for example, one or more server devices, virtual servers built on a cloud computing service, information processing terminals, or the like, and is an information processing system that sells a ticket of a railway or the like to a user by causing a Central Processing Unit (CPU) (not illustrated) to execute middleware such as an Operating System (OS), a Database Management System (DBMS), a web server program, or the like loaded from a recording device such as a Hard Disk Drive (HDD) or a Solid State Drive (SSD) on a memory, or software operating on the middleware.

The transportation ticketing system 1 includes, for example, units such as an application management unit 11, a price calculation unit 12, and a service presentation unit 13 implemented as software. Furthermore, the transportation ticketing system 1 includes data stores such as an application database (DB) 14, a user DB 15, a past available seat DB 16, and a latest available seat DB 17 implemented by a database, a file table, or the like. Note that, in the example of Fig. 1, these units are illustrated to integrally constitute the transportation ticketing system 1, but this is merely a logical configuration. Physically, one or more units may be configured as separate subsystems or external systems, and may be configured to cooperate with each other via a network (not illustrated).

The application management unit 11 has a function of providing the user with a user interface related to application and sale of a ticket. An example of the screen presented to the user will be described later. An account information of the user is registered in the user DB 15, and information related to the user's application for a ticket is recorded in the application DB 14. Note that, according to the present embodiment, processing such as actual generation, issuance, and payment of a ticket is requested to a transportation company system 3 which is an existing business system of a railway company or the like, but the processing may be implemented in the transportation ticketing system 1.

The price calculation unit 12 has a function of calculating the price of the ticket to be presented to the user based on criteria such as a departure place and destination and a deadline date for departure (to the destination) or arrival (from the destination) specified by the user via the application management unit 11. Here, the price at which the business operator is less likely to impair the profit is calculated using a real option calculation formula or the like. In addition, the service presentation unit 13 has a function of selecting a service (including an itinerary) for the departure place and destination specified by the user via the application management unit 11 and presenting the service to the user via the application management unit 11. Here, the service is selected based on a utility value for the business operator based on available seat information and the like and a utility value for the user (prediction of a satisfaction level). The processing in each unit will be described later in detail.

Note that the respective units may refer to the contents of the past available seat DB 16, the latest available seat DB 17, and the like that store the past available seat history and the latest available seat status data acquired from the transportation company system 3, for example.

<Processing Flow (Overall)>

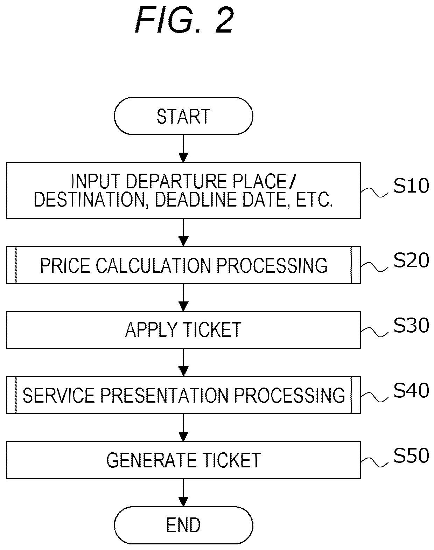

Fig. 2 is a diagram illustrating an example of an overall processing flow of ticket sales according to an embodiment of the present invention. First, the user accesses the application management unit 11 of the transportation ticketing system 1 using a user terminal 2, and inputs desired conditions such as a departure place and a destination, and a travel deadline date (S10). The condition of the travel deadline date is specified as, for example, a departure deadline (by what date the user wants to depart) or an arrival deadline (by what date the user wants to return).

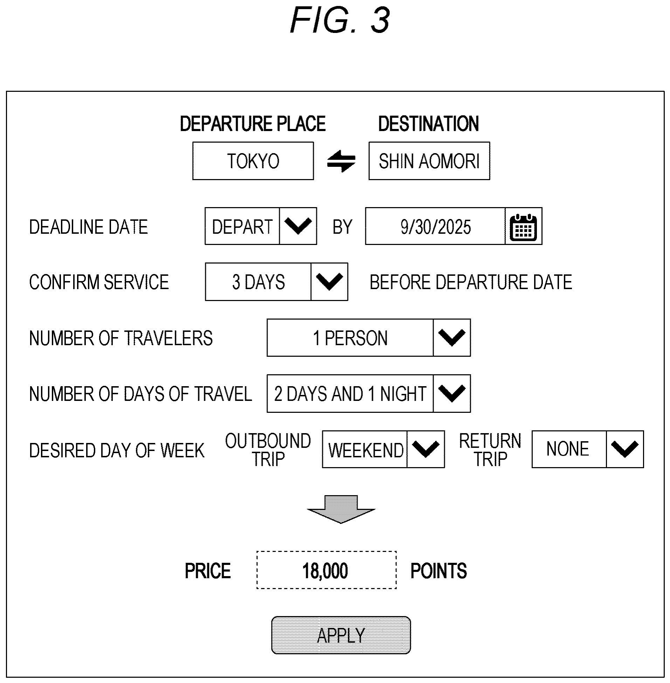

Fig. 3 is a diagram illustrating an outline of an example of a screen on which the user inputs a condition according to an embodiment of the present invention. Through such a screen, the user inputs and specifies a departure place ("Tokyo" in the example of the figure) and a destination ("Shin-Aomori"), a deadline date (depart by "9/30/2025"), a deadline date for confirming the service (by "3 days" before the departure date), the number of travelers ("1 person"), the number of days of travel ("2 days and 1 night"), a desired day of the week for travel (Outbound Trip "Weekend", Return Trip "None"), and the like.

Note that specification of the deadline date of departure or arrival is not limited to direct input of a date or specification of a date from a calendar as illustrated, and any method can be adopted as long as it can quantitatively express the user's request. For example, the deadline date of departure may be specified with a relative numerical value such as "Within X days (X months)", or with a date obtained by referring to other data (in this case, weather forecast, various prediction information, and the like) such as "before the cherry blossom viewing season ends".

Returning to Fig. 2, when the application management unit 11 receives the input of the condition from the user, the price calculation unit 12 performs price calculation processing of calculating the price of the ticket to be presented to the user (S20).

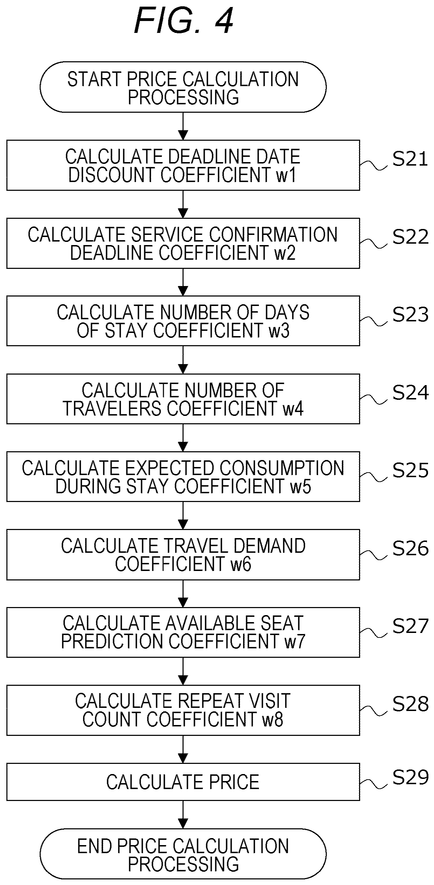

Fig. 4 is a diagram illustrating an outline of an example of a flow of the price calculation processing (S20) according to an embodiment of the present invention. In this processing, one or more types of predetermined coefficients are calculated using the real option calculation formula or the like based on the conditions input by the user, and the price of the ticket having a low risk that impairs the profit of the business operator is calculated based on these coefficients.

According to the present embodiment, for example, a coefficient (w1) for adjusting the price according to the number of days from the current date to the departure deadline is calculated (S21). The coefficient w1 is calculated such that the price of the ticket decreases as the number of days until the deadline date increases, that is, the degree of freedom in selecting the departing date (service) increases. Note that a specific calculation formula and a specific calculation method are not particularly limited as long as they meet the above gist (the same applies to the following coefficients).

Furthermore, a coefficient (w2) for adjusting the price according to the request of deadline date for confirming the service is calculated (S22). For example, the coefficient w2 is calculated such that the shorter the number of desired days between the confirmation of the service and the departure date, the lower the price of the ticket, such that "the confirmation of the service may be one day before the departure". If the confirmation of the service can be performed immediately before departure, the load on the travel preparation of the user increases. On the other hand, the degree of freedom in selecting the departing date is increased for the business operator, and the accuracy of the prediction of the available seat is further increased. Therefore, the available seat can be more appropriately allocated.

Furthermore, a coefficient (w3) for adjusting the price according to the number of travel days (the number of days of stay at the destination) is calculated (S23), and a coefficient (w4) for adjusting the price according to the number of travelers (the number of people traveling with the user) is calculated (S24). For example, as the number of days of stay at the destination is longer, or as the number of people who travel together is greater, an increase in consumption at the destination can be expected, which can contribute to the activation of the regional economy. Therefore, coefficients w3 and w4 are calculated so that the price of the ticket is lowered.

Similarly, a coefficient (w5) for adjusting the price according to the consumption expectation during the stay at the destination is calculated (S25). For example, the coefficient w5 is calculated such that the price of the ticket decreases as the consumption expectation at the destination stay estimated from the history information (for example, a credit card usage history or a cashless payment history held in the user terminal 2) of purchase and expenditure of the user during the past travel increases.

Furthermore, a coefficient (w6) for adjusting the price according to the travel demand for the destination station is calculated (S26). For example, data such as the number of users of the target station is acquired, a travel demand for the target station is calculated based on the acquired data, and the coefficient w6 is calculated such that the price of the ticket decreases as the travel demand is lower (unpopular, inactive). The data used for calculation of the travel demand is not particularly limited, and the travel demand may be increased for, for example, a destination or a station browsed or "Liked" by the user on the present system or on another website or the like, or a station previously specified as a destination in the present system, in addition to the above-described number of the station users.

Furthermore, a coefficient (w7) for adjusting the price according to the status of the available seat information of each service for which a ticket is to be generated is calculated (S27). For example, coefficient w7 is calculated such that the price of a ticket decreases as the predicted number of available seats obtained based on the integral value of the predicted number of available seats of each service for which a ticket is to be generated and a seat is to be allocated increases. The predicted number of available seats can be obtained by, for example, a predetermined calculation formula or an artificial intelligence (AI) service (not illustrated) based on the available seat information acquired from the past available seat DB 16 and the latest available seat DB 17. The information may be acquired from the transportation company system 3.

Furthermore, a coefficient (w8) for adjusting the price according to how many times the user has visited the target destination (station) via the present system (the user's repeat visit count) is calculated (S28). The coefficient w8 is calculated such that the price of the ticket decreases as the number of times the user visits the same destination (station) increases. Furthermore, a user who visits the same destination multiple times is a person who can become part of "related population" as defined by the Ministry of Internal Affairs and Communications (MIC) (people who engage with a region in diverse ways, distinct from those who are in "resident population" or "visitor population"). These individuals are expected to play a crucial role in regional revitalization.

After the coefficients (w1 to w8 in the example of Fig. 4) as described above are calculated, the ticket price to be presented to the user is calculated based on the coefficients (S29), and the price calculation processing is terminated. For example, the price is calculated by multiplying the regular fee by coefficients w1 to w8. Each of the coefficients w1 to w8 may be further weighted and adjusted based on a predetermined criterion. The calculated price is presented to the user in the form illustrated in the lower part of the screen example of Fig. 3, for example. In the screen example of Fig. 3, the price is presented by points as "18,000 points" instead of the amount (yen) for convenience of easy refunding, but may be presented by the amount of money or may be selected by the user.

In the processing example of Fig. 2, the coefficients w1 to w8 are sequentially calculated in steps S21 to S28, but the coefficients are independent from each other, and the calculation order is not limited. The coefficients can be calculated in an arbitrary order, or the calculation processing may be performed in parallel for some or all of the coefficients. In addition, the coefficients w1 to w8 used in the calculation of the price in step S29 are not limited thereto, and only some of the coefficients may be used, or other coefficients may be calculated and used. For example, a coefficient may be set such that the ticket price decreases as the number of days elapsed since the user selected the destination (or clicks "Like", etc.) increases. (This is because it is presumed that the user's desire to visit is stronger when fewer days have passed since the selection, and thus it is preferable that the user purchases the ticket at a price as close to the regular fare as possible.)

Referring back to Fig. 2, after the price calculation processing (S20), the user confirms the presented ticket price, and applies the purchase of the ticket if the user accepts the price (S30). For example, the user confirms the presented price shown in the screen example of Fig. 3, and presses the "Apply" button. When the application is made, payment (payment in money or points for the total amount or some amount thereof) is made in cooperation with the transportation company system 3 or the like. Thereafter, the service presentation processing of selecting and presenting a specific service by the service presentation unit 13 based on the conditions specified by the user is performed at an arbitrary timing by the deadline date for confirming the service (S40). In this process, in the matching between the available seat of the railroad such as Shinkansen and the user who has applied, the number of unallocated available seats and the number of users are minimized, and the service that maximizes the benefit of both the business operator and the user is selected and presented based on the utility value for the business operator and the utility value for the user (prediction of the satisfaction level).

Examples of the constraint conditions at the time of performing matching include the following.

- Both the available seats and the user's applications have a deadline date, and allocation is prioritized for those with the shortest remaining period until their respective deadline dates.
- For a user's application, available seats are allocated in units of round-trip combinations.
- A service cannot be allocated if the service does not have available seats for the number of travelers specified in the user's application.
- A service cannot be allocated if the number of days until its departure is shorter than the deadline for confirming the service specified in the user's application.
- The deadline for confirming a service cannot be reached without the user's application having been allocated an available seat at least once.

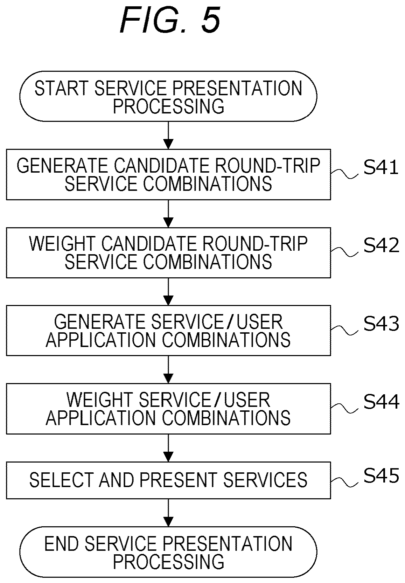

Fig. 5 is a diagram illustrating an outline of an example of a flow of the service presentation processing (S40) according to an embodiment of the present invention. First, based on available seat information in the past available seat DB 16, the latest available seat DB 17, or the like, candidate combinations for a round-trip service are created (S41), and weighting for determining a priority in allocation is further performed on each candidate combination (S42). Here, the candidates for the outbound service are services that leave the departure place by the departure deadline specified by the user in the screen example of Fig. 3, and the candidates for the return service are services that leave the destination after the number of travel days (the number of staying days) specified by the user in the screen example of Fig. 3 with respect to the departure date of the outbound service. In addition, services that leave the destination within several days before and after the departure date may also be included in the candidates.

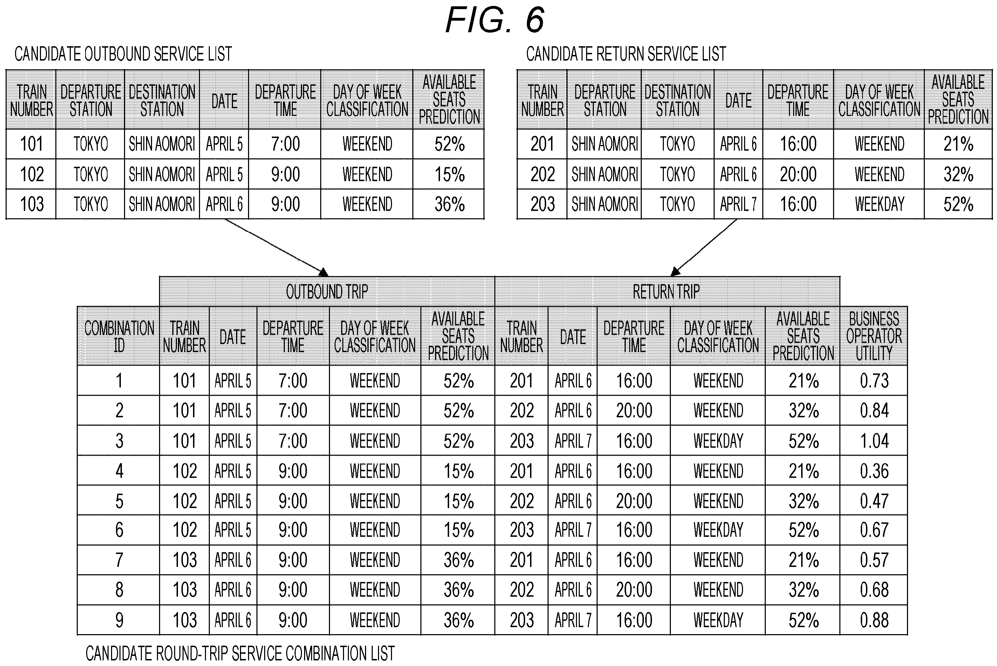

Fig. 6 is a diagram illustrating an outline of an example of creating candidate combinations of services for a round trip according to an embodiment of the present invention. A candidate outbound service list including the candidates of the outbound trip is illustrated on the upper left side of the figure, and a candidate return service list including the candidates of the return trip is illustrated on the upper right side of the figure. These lists can be created based on information acquired from the latest available seat DB 17 or the transportation company system 3. Each list includes, in addition to the contents of the candidate services (name of the station, date, departure time, etc.), information on available seat prediction calculated by a predetermined method based on the day-of-the-week classification of the departure date and available seat information acquired from the past available seat DB 16 and the latest available seat DB 17.

The lower part of Fig. 6 illustrates a candidate round-trip service combination list created by combining the candidate outbound service list and the candidate return service list. Here, combination IDs are assigned to the combinations that simply combine each service in the candidate return service list corresponding to each service in the candidate outbound service combination list, and a business operator utility value calculated for each combination is set. The business operator utility value indicates the magnitude of the utility of each combination for the business operator, and is a weighting value that determines the priority at the time of the service allocation. For example, since the utility for the business operator when a seat is sold is greater as the seat occupancy prediction is greater, a value obtained by adding an outbound-trip seat occupancy prediction value and a return-trip seat occupancy prediction value as in the example in the figure can be set as the business operator utility value. In addition, for example, the calculation may be performed in consideration of other parameters that may affect the utility for the business operator, such as the number of days until the departure date.

Returning to Fig. 5, after the candidate round-trip service combination list is created, a combination of each round-trip service combination in the list and the condition of the application by the user is created (S43), and weighting for determining the priority at the time of allocation is further performed for each combination (S44).

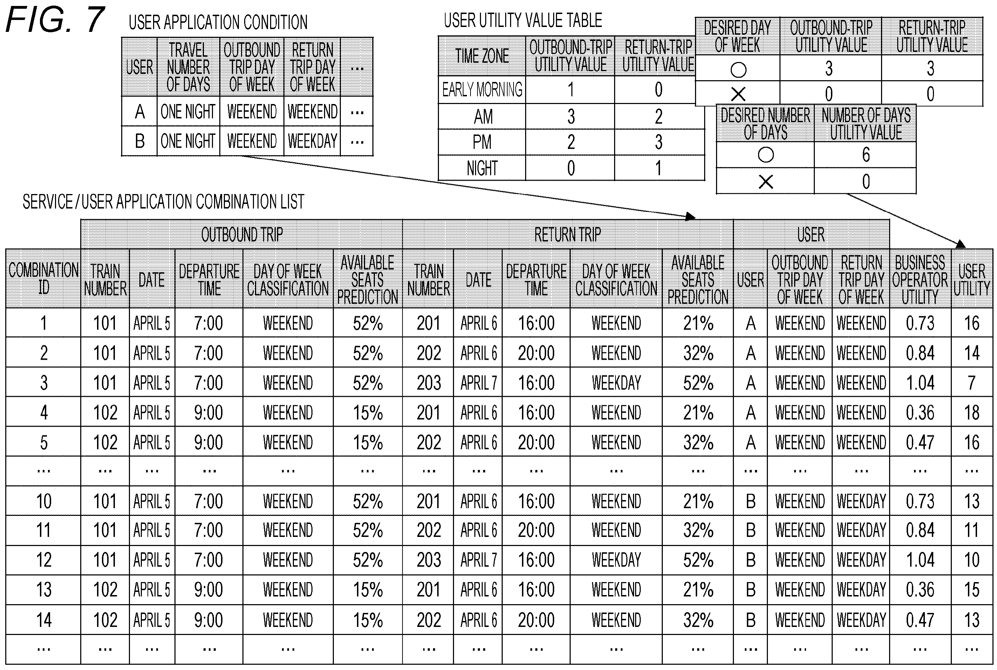

Fig. 7 is a diagram illustrating an outline of a creation example of a combination of a round-trip service and a user application according to an embodiment of the present invention. The upper left side in the figure illustrates conditions of user's applications. Here, it is indicated that there are a plurality of users (users "A" and "B") who are currently applying, and conditions (such as the number of travel days and the day-of-the-week classification) specified by each user at the time of application are illustrated.

An example of a table of the user utility value is illustrated on the upper right side in the figure. The user utility value indicates a magnitude estimated as a utility (user satisfaction or convenience) for the user (not a specific user but a general user) with respect to the contents of the candidate round trips or the contents specified by the user, and is a weighting value for determining the priority in the service allocation. For example, as illustrated in the example of the figure, in the departure time zone of the round trip, the outbound trip is set so that the utility value of the morning departure is high and the utility value of the night departure is low, and the return trip is set so that the utility value of the afternoon departure is high and the utility value of the early morning departure is low. In addition, in a case where the user's desired condition of the date of the week for departure or the desired condition of the number of days of travel is satisfied ("O" in the table), the utility value is set to be higher than that in a case where the user's desired condition of the date of the week for departure or the desired condition of the number of days of travel is not satisfied ("X" in the table). The user utility value table is not limited to the illustrated table, and a table relating to other parameters that can affect the utility for the user may be set.

The lower part of Fig. 7 illustrates a service/user application combination list created by combining the candidate round-trip service combination list illustrated in the lower part of Fig. 6 and the application condition of each user in the upper left part of Fig. 7. Here, the application condition of each user is simply combined for each combination in the candidate round-trip service combination list, and the user utility value calculated for each combination is set. The user utility value can be, for example, a value obtained by extracting and adding a corresponding utility value from each user utility value table based on the content of each combination.

Returning to Fig. 5, after the service/user application combination list is created, the service to be allocated to each user is selected and presented via the application management unit 11 based on the weighting (business operator utility value, user utility value) set for each combination in the list such that the utility of the company and the user is maximized and the number of unallocated available seats and users is minimized, and then the service presentation processing ends (S45).

For example, for each combination of round trip services in the service/user application combination list illustrated in the example of Fig. 7, from the values of the respective business operator utility and user utility,

$\lambda \times$ business operator utility value + user utility value is calculated, and a combination of round-trip services with the maximum value is selected as the service for each user. Note that $\lambda$ is an adjustment coefficient, and it is possible to adjust which utility of the business operator or the user is prioritized by setting this value. For example, the value of $\lambda$ can be appropriately adjusted by determining how much the utility of the user should be emphasized based on the application situation by the user, a result of a satisfaction level survey, and the like.

Returning to Fig. 2, after the service presentation processing (S40), in a case where the user accepts the combination of the round-trip services presented to the user, the application management unit 11 generates the ticket for the user, and ends the processing of ticket sales.

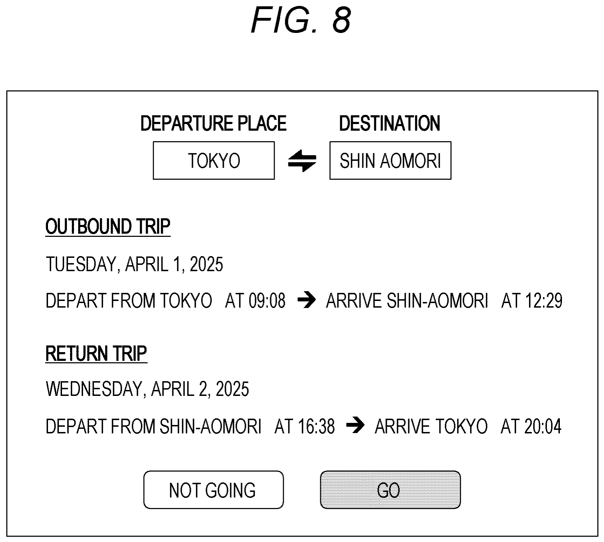

Fig. 8 is a diagram illustrating an outline of an example of a screen for presenting contents selected as a round-trip service to the user according to an embodiment of the present invention. The user determines whether or not to accept the round-trip service combination presented via such a screen, and presses a "GO" button when the user accepts the round-trip service combination, and presses a "NOT GOING" button when the user does not accept the round-trip service combination. In a case where the user approves the operation and presses the "GO" button, processing such as generating a ticket with the approved content is then performed in cooperation with the transportation company system 3 or the like. Instead of making a payment in the application processing (step S30 in Fig. 2) described above, a payment may be made at this point.

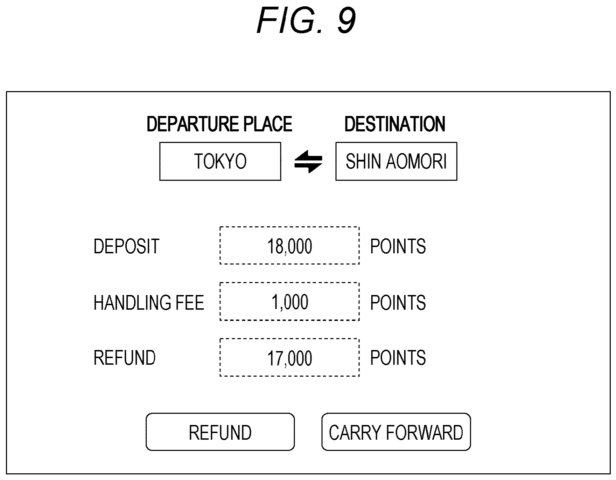

Fig. 9 is a diagram illustrating an outline of an example of a screen in a case where a ticket is not sold according to an embodiment of the present invention. For example, after the service is presented on the screen as illustrated in Fig. 8, in a case where the deadline date for confirming the service has elapsed without the user's approval, the presented price and the content of the service become invalid. Therefore, the screen as in the example of Fig. 9 is displayed to perform adjustment processing related to the paid amount and points. For example, in a case where the user has already paid the full or a part of the amount with money or points, as illustrated in the example of Fig. 9, the user may select whether to refund (reimburse) the payment or to carry the payment for the subsequent purchase of a ticket. Note that, in a case where the user desires the refund, a predetermined amount ("1,000 points" in the figure) may be deducted as a handling fee before the refund is issued.

As described above, according to the transportation ticketing system 1 according to an embodiment of the present invention, a ticket price is calculated and presented using a method or a concept such as a real option based on the latest available seat information, and in a case where the user makes an application, a specific schedule and services that maximize the benefit of both the business operator and the user are selected based on the business operator utility value and the user utility value and presented to the user. As a result, instead of removing the user's freedom to decide the travel itinerary, it is possible to greatly discount the fare of the ticket, and it is possible to actively induce the user by offering the maximum discount while minimizing the risk of the business operator impairing profits.

The invention made by the present inventor has been specifically described above based on the embodiment, but the present invention is not limited to the embodiment described above, and it is understood that various changes can be made without departing from the gist of the present invention. The embodiment described above has been described in detail to make the present invention easily understandable, and the present invention is not necessarily limited to an embodiment including all of the configurations described above. Furthermore, some of the configurations in the embodiment described above can be added with other configurations, can be deleted, or can be replaced with other configurations.

Some or all of the configurations, functions, processing units, processing procedures, or the like described above may be implemented by hardware, for example, by being designed as integrated circuits. The configurations, functions, or the like described above may be implemented by software by a processor interpreting and executing programs for achieving respective functions. Information such as programs, tables, or files for achieving the respective functions can be stored in a recording device such as a memory, a hard disk, or an SSD, or in a recording medium such as an IC card, an SD card, or a DVD.

Each of the drawings described above illustrates control lines or information lines that are considered to be necessary for description, and does not necessarily illustrate all of the control lines or information lines in implementation. It may be considered that almost all of the configurations are mutually connected in practice.

Industrial Applicability

The present invention can be applied to a transportation ticketing system that proposes a service that maximizes the benefit of both a transportation operator and a user.

Reference Signs List

1      Transportation ticketing system
2      User terminal
3      Transportation company system
11     Application management unit
12     Price calculation unit
13     Service presentation unit
14     Application DB
15     User DB
16     Past available seat DB
17     Latest available seat DB

**Claims**

1.  A transportation ticketing system that sells a ticket related to a transportation means to a user, the transportation ticketing system comprising:

    an application management unit configured to receive a condition including a destination and a deadline specified by the user;
    a price calculation unit configured to calculate a price of the ticket based on available seat information up to the specified deadline, and present the price to the user by the application management unit; and
    a service presentation unit configured, when the user accepts the presented price, to select a service based on a predetermined criterion from candidate combinations of an outbound service satisfying the condition and a return service corresponding to the outbound service and present the service to the user by the application management unit.

2.  The transportation ticketing system according to claim 1, wherein
    the price calculation unit calculates the price based on, in addition to the available seat information, information including a number of days up to the deadline date, user's specification regarding the number of days up to the deadline date, a number of days of stay at the destination, a number of people traveling to the destination together with the user, prediction regarding an amount of money consumed by the user at the destination, a degree of travel demand for the destination, and a number of visits to the destination by the user in the past.

3. The transportation ticketing system according to claim 1, wherein
the service presentation unit selects the service based on available seat information related to each candidate combination and a value of an index indicating utility for the user.

4. The transportation ticketing system according to claim 1, wherein
the index indicating the utility for the user is calculated based on information including departure time zones of the outbound service and the return service of each candidate combination, whether the outbound service and the return service of each candidate combination respectively satisfy user's desired day of week for departure, and whether departure dates of the outbound service and the return service of each candidate combination satisfy the user's desired number of days of stay at the destination.

# FIG. 1

3: TRANSPORTATION COMPANY SYSTEM

1

16

TRANSPORTATION TICKETING SYSTEM

PAST AVAILABLE SEAT DB

LATEST AVAILABLE SEAT DB

17

15

12

USER DB

PRICE CALCULATION UNIT

SERVICE PRESENTATION UNIT

13

14

APPLICATION DB

APPLICATION MANAGEMENT UNIT

11

2: USER TERMINAL

# FIG. 2

```
                    ┌─────────────┐
                    │    START    │
                    └──────┬──────┘
                           │
                           ▼
         ┌───────────────────────────────────┐
         │      INPUT DEPARTURE PLACE/        │  ～ S10
         │  DESTINATION, DEADLINE DATE, ETC.  │
         └─────────────────┬─────────────────┘
                           │
                           ▼
         ┌───────────────────────────────────┐
         │     PRICE CALCULATION PROCESSING   │  ～ S20
         └─────────────────┬─────────────────┘
                           │
                           ▼
         ┌───────────────────────────────────┐
         │            APPLY TICKET            │  ～ S30
         └─────────────────┬─────────────────┘
                           │
                           ▼
         ┌───────────────────────────────────┐
         │   SERVICE PRESENTATION PROCESSING  │  ～ S40
         └─────────────────┬─────────────────┘
                           │
                           ▼
         ┌───────────────────────────────────┐
         │          GENERATE TICKET           │  ～ S50
         └─────────────────┬─────────────────┘
                           │
                           ▼
                    ┌─────────────┐
                    │     END     │
                    └─────────────┘
```

# FIG. 3

| DEPARTURE PLACE | | DESTINATION |
|---|---|---|
| TOKYO | ⇌ | SHIN AOMORI |

DEADLINE DATE    DEPART ∨    BY    9/30/2025 📅

CONFIRM SERVICE    3 DAYS ∨    BEFORE DEPARTURE DATE

NUMBER OF TRAVELERS    1 PERSON ∨

NUMBER OF DAYS OF TRAVEL    2 DAYS AND 1 NIGHT ∨

DESIRED DAY OF WEEK    OUTBOUND TRIP    WEEKEND ∨    RETURN TRIP    NONE ∨

⬇

PRICE    18,000    POINTS

APPLY

# FIG. 4

START PRICE CALCULATION PROCESSING

↓

CALCULATE DEADLINE DATE DISCOUNT COEFFICIENT w1 — S21

↓

CALCULATE SERVICE CONFIRMATION DEADLINE COEFFICIENT w2 — S22

↓

CALCULATE NUMBER OF DAYS OF STAY COEFFICIENT w3 — S23

↓

CALCULATE NUMBER OF TRAVELERS COEFFICIENT w4 — S24

↓

CALCULATE EXPECTED CONSUMPTION DURING STAY COEFFICIENT w5 — S25

↓

CALCULATE TRAVEL DEMAND COEFFICIENT w6 — S26

↓

CALCULATE AVAILABLE SEAT PREDICTION COEFFICIENT w7 — S27

↓

CALCULATE REPEAT VISIT COUNT COEFFICIENT w8 — S28

↓

CALCULATE PRICE — S29

↓

END PRICE CALCULATION PROCESSING

# FIG. 5

```
┌─────────────────────────────────┐
│   START SERVICE PRESENTATION    │
│          PROCESSING             │
└─────────────────────────────────┘
                │
                ▼
┌─────────────────────────────────┐
│ GENERATE CANDIDATE ROUND-TRIP   │ ～ S41
│    SERVICE COMBINATIONS         │
└─────────────────────────────────┘
                │
                ▼
┌─────────────────────────────────┐
│  WEIGHT CANDIDATE ROUND-TRIP    │ ～ S42
│    SERVICE COMBINATIONS         │
└─────────────────────────────────┘
                │
                ▼
┌─────────────────────────────────┐
│    GENERATE SERVICE / USER      │ ～ S43
│   APPLICATION COMBINATIONS      │
└─────────────────────────────────┘
                │
                ▼
┌─────────────────────────────────┐
│     WEIGHT SERVICE / USER       │ ～ S44
│   APPLICATION COMBINATIONS      │
└─────────────────────────────────┘
                │
                ▼
┌─────────────────────────────────┐
│   SELECT AND PRESENT SERVICES   │ ～ S45
└─────────────────────────────────┘
                │
                ▼
┌─────────────────────────────────┐
│    END SERVICE PRESENTATION     │
│          PROCESSING             │
└─────────────────────────────────┘
```

# FIG. 6

CANDIDATE OUTBOUND SERVICE LIST

| TRAIN NUMBER | DEPARTURE STATION | DESTINATION STATION | DATE | DEPARTURE TIME | DAY OF WEEK CLASSIFICATION | AVAILABLE SEATS PREDICTION |
|---|---|---|---|---|---|---|
| 101 | TOKYO | SHIN AOMORI | APRIL 5 | 7:00 | WEEKEND | 52% |
| 102 | TOKYO | SHIN AOMORI | APRIL 5 | 9:00 | WEEKEND | 15% |
| 103 | TOKYO | SHIN AOMORI | APRIL 6 | 9:00 | WEEKEND | 36% |

CANDIDATE RETURN SERVICE LIST

| TRAIN NUMBER | DEPARTURE STATION | DESTINATION STATION | DATE | DEPARTURE TIME | DAY OF WEEK CLASSIFICATION | AVAILABLE SEATS PREDICTION |
|---|---|---|---|---|---|---|
| 201 | SHIN AOMORI | TOKYO | APRIL 6 | 16:00 | WEEKEND | 21% |
| 202 | SHIN AOMORI | TOKYO | APRIL 6 | 20:00 | WEEKEND | 32% |
| 203 | SHIN AOMORI | TOKYO | APRIL 7 | 16:00 | WEEKDAY | 52% |

| COMBINATION ID | OUTBOUND TRIP | | | | | RETURN TRIP | | | | | BUSINESS OPERATOR UTILITY |
|---|---|---|---|---|---|---|---|---|---|---|---|
| | TRAIN NUMBER | DATE | DEPARTURE TIME | DAY OF WEEK CLASSIFICATION | AVAILABLE SEATS PREDICTION | TRAIN NUMBER | DATE | DEPARTURE TIME | DAY OF WEEK CLASSIFICATION | AVAILABLE SEATS PREDICTION | |
| 1 | 101 | APRIL 5 | 7:00 | WEEKEND | 52% | 201 | APRIL 6 | 16:00 | WEEKEND | 21% | 0.73 |
| 2 | 101 | APRIL 5 | 7:00 | WEEKEND | 52% | 202 | APRIL 6 | 20:00 | WEEKEND | 32% | 0.84 |
| 3 | 101 | APRIL 5 | 7:00 | WEEKEND | 52% | 203 | APRIL 7 | 16:00 | WEEKDAY | 52% | 1.04 |
| 4 | 102 | APRIL 5 | 9:00 | WEEKEND | 15% | 201 | APRIL 6 | 16:00 | WEEKEND | 21% | 0.36 |
| 5 | 102 | APRIL 5 | 9:00 | WEEKEND | 15% | 202 | APRIL 6 | 20:00 | WEEKEND | 32% | 0.47 |
| 6 | 102 | APRIL 5 | 9:00 | WEEKEND | 15% | 203 | APRIL 7 | 16:00 | WEEKDAY | 52% | 0.67 |
| 7 | 103 | APRIL 6 | 9:00 | WEEKEND | 36% | 201 | APRIL 6 | 16:00 | WEEKEND | 21% | 0.57 |
| 8 | 103 | APRIL 6 | 9:00 | WEEKEND | 36% | 202 | APRIL 6 | 20:00 | WEEKEND | 32% | 0.68 |
| 9 | 103 | APRIL 6 | 9:00 | WEEKEND | 36% | 203 | APRIL 7 | 16:00 | WEEKDAY | 52% | 0.88 |

CANDIDATE ROUND-TRIP SERVICE COMBINATION LIST

EP 4 783 080 A1

# FIG. 7

**USER APPLICATION CONDITION**

| USER | TRAVEL NUMBER OF DAYS | OUTBOUND TRIP DAY OF WEEK | RETURN TRIP DAY OF WEEK | ... |
|------|------|------|------|------|
| A | ONE NIGHT | WEEKEND | WEEKEND | ... |
| B | ONE NIGHT | WEEKEND | WEEKDAY | ... |

**USER UTILITY VALUE TABLE**

| TIME ZONE | OUTBOUND-TRIP UTILITY VALUE | RETURN-TRIP UTILITY VALUE |
|------|------|------|
| EARLY MORNING | 1 | 0 |
| AM | 3 | 2 |
| PM | 2 | 3 |
| NIGHT | 0 | 1 |

| DESIRED DAY OF WEEK | OUTBOUND-TRIP UTILITY VALUE | RETURN-TRIP UTILITY VALUE |
|------|------|------|
| ○ | 3 | 3 |
| × | 0 | 0 |

| DESIRED NUMBER OF DAYS | NUMBER OF DAYS UTILITY VALUE |
|------|------|
| ○ | 6 |
| × | 0 |

**SERVICE / USER APPLICATION COMBINATION LIST**

| COMBINATION ID | OUTBOUND TRIP | | | | | RETURN TRIP | | | | | USER | | | | |
|------|------|------|------|------|------|------|------|------|------|------|------|------|------|------|------|
| | TRAIN NUMBER | DATE | DEPARTURE TIME | DAY OF WEEK CLASSIFICATION | AVAILABLE SEATS PREDICTION | TRAIN NUMBER | DATE | DEPARTURE TIME | DAY OF WEEK CLASSIFICATION | AVAILABLE SEATS PREDICTION | USER | OUTBOUND TRIP DAY OF WEEK | RETURN TRIP DAY OF WEEK | BUSINESS OPERATOR UTILITY | USER UTILITY |
| 1 | 101 | APRIL 5 | 7:00 | WEEKEND | 52% | 201 | APRIL 6 | 16:00 | WEEKEND | 21% | A | WEEKEND | WEEKEND | 0.73 | 16 |
| 2 | 101 | APRIL 5 | 7:00 | WEEKEND | 52% | 202 | APRIL 6 | 20:00 | WEEKEND | 32% | A | WEEKEND | WEEKEND | 0.84 | 14 |
| 3 | 101 | APRIL 5 | 7:00 | WEEKEND | 52% | 203 | APRIL 7 | 16:00 | WEEKDAY | 52% | A | WEEKEND | WEEKEND | 1.04 | 7 |
| 4 | 102 | APRIL 5 | 9:00 | WEEKEND | 15% | 201 | APRIL 6 | 16:00 | WEEKEND | 21% | A | WEEKEND | WEEKEND | 0.36 | 18 |
| 5 | 102 | APRIL 5 | 9:00 | WEEKEND | 15% | 202 | APRIL 6 | 20:00 | WEEKEND | 32% | A | WEEKEND | WEEKEND | 0.47 | 16 |
| ... | ... | ... | ... | ... | ... | ... | ... | ... | ... | ... | ... | ... | ... | ... | ... |
| 10 | 101 | APRIL 5 | 7:00 | WEEKEND | 52% | 201 | APRIL 6 | 16:00 | WEEKEND | 21% | B | WEEKEND | WEEKDAY | 0.73 | 13 |
| 11 | 101 | APRIL 5 | 7:00 | WEEKEND | 52% | 202 | APRIL 6 | 20:00 | WEEKEND | 32% | B | WEEKEND | WEEKDAY | 0.84 | 11 |
| 12 | 101 | APRIL 5 | 7:00 | WEEKEND | 52% | 203 | APRIL 7 | 16:00 | WEEKDAY | 52% | B | WEEKEND | WEEKDAY | 1.04 | 10 |
| 13 | 102 | APRIL 5 | 9:00 | WEEKEND | 15% | 201 | APRIL 6 | 16:00 | WEEKEND | 21% | B | WEEKEND | WEEKDAY | 0.36 | 15 |
| 14 | 102 | APRIL 5 | 9:00 | WEEKEND | 15% | 202 | APRIL 6 | 20:00 | WEEKEND | 32% | B | WEEKEND | WEEKDAY | 0.47 | 13 |
| ... | ... | ... | ... | ... | ... | ... | ... | ... | ... | ... | ... | ... | ... | ... | ... |

EP 4 783 080 A1

# FIG. 8

DEPARTURE PLACE    DESTINATION

TOKYO ⇄ SHIN AOMORI

**OUTBOUND TRIP**

TUESDAY, APRIL 1, 2025

DEPART FROM TOKYO  AT 09:08 ➡ ARRIVE SHIN-AOMORI  AT 12:29

**RETURN TRIP**

WEDNESDAY, APRIL 2, 2025

DEPART FROM SHIN-AOMORI  AT 16:38 ➡ ARRIVE TOKYO  AT 20:04

NOT GOING    GO

# FIG. 9

DEPARTURE PLACE     DESTINATION

TOKYO ⇄ SHIN AOMORI

DEPOSIT     18,000     POINTS

HANDLING FEE     1,000     POINTS

REFUND     17,000     POINTS

REFUND     CARRY FORWARD

## EUROPEAN SEARCH REPORT

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/13299 A2 (TRAVEL SERVICES INTERNATIONAL [US]) 22 February 2001 (2001-02-22) * the whole document * | 1-4 | INV. G06Q10/00 G06Q10/02 G06Q30/0283 G06Q50/40 |
| A | US 2017/344913 A1 (VAIDYA SRIPAD [IN] ET AL) 30 November 2017 (2017-11-30) * the whole document * | 1-4 | |
| A | US 2021/374858 A1 (SIMPSON ERIK MOWERY [US]) 2 December 2021 (2021-12-02) * the whole document * | 1-4 | |

|  | TECHNICAL FIELDS SEARCHED (IPC) |
|---|---|
|  | G06Q |

The present search report has been drawn up for all claims

| Place of search | Date of completion of the search | Examiner |
|---|---|---|
| Munich | 19 June 2026 | Anastasov, Yuliyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 26 15 2262

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2026

| Patent document cited in search report | | Publication date | Patent family member(s) | | Publication date |
|---|---|---|---|---|---|
| WO 0113299 | A2 | 22-02-2001 | AU | 7056900 A | 13-03-2001 |
| | | | WO | 0113299 A2 | 22-02-2001 |
| US 2017344913 | A1 | 30-11-2017 | NONE | | |
| US 2021374858 | A1 | 02-12-2021 | US | 2020151816 A1 | 14-05-2020 |
| | | | US | 2021374858 A1 | 02-12-2021 |
| | | | US | 20260038040 A1 | 05-02-2026 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7348382 B